# FASCICULE DE BREVET EUROPEEN

(11) **EP 2 352 772 B1**
(45) Date de publication et mention de la délivrance du brevet: **13.03.2019**
(21) Numéro de dépôt: 09801735.3
(22) Date de dépôt: 02.12.2009
(51) Int. Cl.: C08F 255/02, C08L 51/06, C09J 151/06, B32B 27/06

(54) **COMPOSITION COMPRENANT DU POLYPROPYLENE ET/OU UN COPOLYMERE DU PROPYLENE OBTENUS A PARTIR DE MATIERES RENOUVELABLES ET UTILISATIONS**
ZUSAMMENSETZUNG, ENTHALTEND POLYPROPYLEN UND/ODER EIN PROPYLENCOPOLYMER, ERHALTEN AUS NACHWACHSENDEN ROHSTOFFEN, UND VERWENDUNGEN DAVON
COMPOSITION CONTAINING POLYPROPYLENE AND/OR A PROPYLENE COPOLYMER OBTAINED FROM RENEWABLE MATERIALS, AND USES THEREOF

(30) Priorité: 03.12.2008 FR 0858244
(43) Date de publication de la demande: 10.08.2011
(73) Titulaire: Arkema France, 92700 Colombes (FR)
(72) Inventeur: DEVISME, Samuel, F-76000 Rouen (FR); CHOPINEZ, Fabrice, PA 19904 (US); PRADEL, Jean-Laurent, F-27800 Boisney (FR); LE, Guillaume, F-14460 Colombelles (FR); ROUSSEL, Thomas, F-69006 Lyon (FR); DUBOIS, Jean-Luc, F-69390 Millery (FR)
(74) Mandataire: Gorintin, Sarah
(86) Numéro de dépôt international: PCT/FR2009/052365
(87) Numéro de publication internationale: WO 2010/063947

(56) Documents cités:
- EP-A- 1 219 675
- WO-A-03/011955
- WO-A-2008/067627
- FR-A- 2 916 203
- JP-A- 9 095 567
- KR-A- 20030 022 426
- US-A- 5 424 362
- US-A- 5 883 188

## Description

### Domaine de l'invention

La présente invention se rapporte à un procédé de fabrication d'un copolymère du propylène à partir de matières renouvelables et aux applications de ces polymères.

En particulier l'invention se rapporte à un procédé de fabrication d'un homopolymère ou d'un copolymère du propylène à partir de propylène obtenu à partir d'au moins un alcool issu de la fermentation de matières premières renouvelables, de préférence les matières premières renouvelables sont des matières végétales.

### Etat de la technique

Le propylène fait partie des produits de l'industrie pétrochimique les plus couramment fabriqués et utilisés. Les polymères à base de propylène sont principalement utilisés dans l'industrie textile, le mobilier notamment le mobilier de jardin, les emballages (rigides ou souples), la construction automobile.

Le propylène entre dans la fabrication de nombreux polymères parmi lesquels le polypropylène (homopolymère), le polypropylène copolymère statistique qui est en général produit avec de l'éthylène en tant que comonomère et le polypropylène copolymère séquencé qui est un caoutchouc d'éthylène et de propylène produit en plusieurs étapes.

Classiquement, le propylène est obtenu par craquage catalytique ou thermique de fractions pétrolières.

Il existe trois formes de polypropylènes : isotactique, syndiotactique et atactique qui différent l'une de l'autre par l'emplacement du groupe méthyle sur la chaîne polymérique. Industriellement, le polymère isotactique constitue la forme recherchée tandis qu'on cherche à éviter l'obtention de polypropylène atactique dans le produit final.

Le polypropylène atactique peut être supprimé par centrifugation, d'importantes recherches ont également été mises en oeuvre pour obtenir directement du polypropylène ne contenant pas de polypropylène atactique.

Un polypropylène particulièrement intéressant est le polypropylène greffé, ce polypropylène peut être utilisé dans de nombreuses applications.

Un des problèmes posé par les procédés de synthèse des polymères à base de propylène de l'art antérieur est qu'ils sont réalisés à partir de matières premières d'origine fossile (pétrole) non renouvelable. Or les ressources en pétrole sont limitées, l'extraction du pétrole requiert d'aller creuser de plus en plus profond et dans des conditions techniques toujours plus difficiles nécessitant des équipements sophistiqués et la mise en oeuvre de procédés toujours plus coûteux en énergie. Ces contraintes ont une conséquence directe sur le coût de fabrication du propylène et donc de ses homopolymères et copolymères.

Pour limiter la consommation de pétrole, des matériaux recyclés ou des procédés de fabrication de matériau par recyclage de polyoléfines ont été décrits dans les documents JP 09 095567 A, EP 1 219 675 ou KR 20030022426. Cependant, le recyclage implique une transformation des polyoléfines recyclées au dessus de leurs températures de fusion , ce qui implique leur dégradation. Ainsi, au bout de plusieurs recyclages, le matériau est complètement dégradé et a perdu ses propriétés initiales. De plus, les matières premières restent issues de matières premières d'origine fossile.

Dans la demande WO2008/067627, il est décrit un procédé de fabrication de polyoléfine à partir d'oléfines comprenant de 2 à 4 atomes de carbone à partir de ressources renouvelables. En particulier, l'étape de synthèse d'oléfines pour la fabrication de cette polyoléfine comprend une étape de gaséification de biomasse. Cette étape est réalisée à température très élevée (généralement entre 1100°C et 1300°C), ce qui implique de fortes consommations d'énergie pour cette étape. Si cette énergie est d'origine fossile, elle contribue alors à la libération de gaz à effet de serre (dont le CO₂).

On connaît également les documents JP 9095567, EP 1219675, KR 20030022426 qui n'utilisent pas des matières renouvelables et se contente de recycler des produits.

On connaît enfin le document FR 2916203, déposé au nom de la demanderesse, qui divulgue une composition comprenant de 1 à 99% en poids de polymère(s) (A) biorenouvelable(s) et/ou biodégradable(s) et greffés, de 1 à 99% en poids de polymère(s) (B) non-greffés, biorenouvelable(s) et/ou biodégradable(s), et identique(s) ou compatible(s) avec (A), de 0 à 50% en poids d'un composant (C) servant à assouplir ladite composition et de 0 à 50% en poids d'un matériau (D) comprenant de l'amidon. Cette composition, complexe et destinée à un usage très particulier, ne comprend pas exclusivement des composants comprenant du carbone issu de matières premières renouvelables.

### Description de l'invention

De manière avantageuse et surprenante, les inventeurs de la présente demande ont mis en oeuvre un procédé de fabrication industriel des polymères à base de propylène à partir de matières premières renouvelables.

Le procédé selon l'invention permet de s'affranchir au moins en partie des matières premières d'origine fossile et de les remplacer par des matières premières renouvelables.

En outre les polymères à base de propylène obtenus suivant le procédé selon l'invention sont de qualité telle qu'ils peuvent être utilisés dans toutes les applications dans lesquelles il est connu d'utiliser ces polymères, y compris dans les applications les plus exigeantes.

L'invention a pour objet un polymère du propylène dans lequel au moins une partie des atomes de carbone du propylène est d'origine renouvelable, cette partie d'origine renouvelable peut être déterminée selon la norme ASTM D 6866-06, ce polymère est en particulier susceptible d'être obtenu par le procédé décrit ci-dessous.

En particulier, la présente invention a pour objet le polymère du propylène greffé dans lequel au moins une partie des atomes de carbone est d'origine renouvelable, c'est-à-dire que les atomes de carbone d'origine renouvelable peuvent être déterminés selon la norme ASTM D 6866-06. Ledit polymère du propylène greffé est susceptible d'être obtenu par le procédé selon l'invention.

L'invention a encore pour objet un procédé de fabrication d'un polymère du propylène comprenant les étapes suivantes :
a. fermentation de matières premières renouvelables, et éventuellement purification, pour produire un alcool ou un mélange d'alcools, ledit alcool ou mélange d'alcools comprenant au moins de l'isopropanol et/ou au moins un mélange d'éthanol et de 1-butanol,
b. déshydratation de l'alcool ou du mélange d'alcools obtenus en vue de produire, dans au moins un premier réacteur, un alcène ou un mélange d'alcènes, ledit alcène ou mélange d'alcènes comprenant au moins du propylène et, éventuellement purification du mélange d'alcènes pour obtenir du propylène,
c. polymérisation, dans au moins un second réacteur, du propylène, éventuellement en présence d'un comonomère, pour produire un polymère du propylène ;
d. isolation du polymère du propylène obtenu à l'issue de l'étape c) ;
e. de préférence, greffage du polymère du propylène obtenu à l'issue de l'étape d).

L'invention a également pour objet les compositions comprenant au moins un homopolymère ou copolymère du propylène de préférence greffé ainsi que leurs utilisations.

D'autres objets, aspects, caractéristiques de l'invention apparaîtront à la lecture de la description suivante.

L'étape a) du procédé de fabrication des polymères du propylène comprend la fermentation de matières premières renouvelables pour produire au moins un alcool. Lorsqu'un alcool est produit, il s'agit de l'isopropanol. Lorsqu'un mélange d'alcools est produit, ce mélange comprend au moins de l'isopropanol et/ou au moins de l'éthanol, du 1-butanol.

Une matière première renouvelable est une ressource naturelle, par exemple animale ou végétale, dont le stock peut se reconstituer sur une période courte à l'échelle humaine. Il faut en particulier que ce stock puisse se renouveler aussi vite qu'il est consommé. Par exemple, les matières végétales présentent l'avantage de pouvoir être cultivées sans que leur consommation aboutisse à une diminution apparente des ressources naturelles.

A la différence des matériaux issus de matières fossiles, les matières premières renouvelables contiennent du ¹⁴C. Tous les échantillons de carbone tirés d'organismes vivants (animaux ou végétaux) sont en fait un mélange de 3 isotopes : ¹²C (représentant environ 98,892 %), ¹³C (environ 1,108 %) et ¹⁴C (traces: 1,2.10⁻¹⁰ %). Le rapport ¹⁴C/¹²C des tissus vivants est identique à celui de l'atmosphère. Dans l'environnement, le ¹⁴C existe sous deux formes prépondérantes : sous forme de gaz carbonique (CO₂), et sous forme organique, c'est-à-dire de carbone intégré dans des molécules organiques.

Dans un organisme vivant, le rapport ¹⁴C/¹²C est maintenu constant par le métabolisme car le carbone est continuellement échangé avec l'environnement extérieur. La proportion de ¹⁴C étant constante dans l'atmosphère, il en est de même dans l'organisme, tant qu'il est vivant, puisqu'il absorbe ce ¹⁴C au même titre que le ¹²C ambiant. Le rapport moyen de ¹⁴C/¹²C est égal à 1,2x10⁻¹².

Le ¹²C est stable, c'est-à-dire que le nombre d'atomes de ¹²C dans un échantillon donné est constant au cours du temps. Le ¹⁴C est radioactif, le nombre d'atomes de ¹⁴C dans un échantillon décroît au cours du temps (t), sa demi-vie étant égale à 5730 ans.

La teneur en ¹⁴C est sensiblement constante depuis l'extraction des matières premières renouvelables, jusqu'à la fabrication du polymère du polypropylène selon l'invention et même jusqu'à la fin de vie de l'objet fabriqué en ledit polymère.

Par conséquent, la présence de ¹⁴C dans un matériau, et ce, quelqu'en soit la quantité, donne une indication sur l'origine des molécules le constituant, à savoir qu'elles proviennent de matières premières renouvelables et non de matériaux fossiles.

La quantité de ¹⁴C dans un matériau peut être déterminée par l'une des méthodes décrites dans la norme ASTM D6866-06 (Standard Test Methods for Determining the Biobased Content of Natural Range Materials Using Radiocarbon and Isotope Ratio Mass Spectrometry Analysis).

Cette norme comporte trois méthodes de mesure du carbone organique issu de matières premières renouvelables, dénommé en langue anglaise « biobased carbon ». Les proportions indiquées pour le polymère de propylène de l'invention sont de préférence mesurées selon la méthode par spectrométrie de masse ou la méthode par spectrométrie à scintillation liquide décrite dans cette norme, et tout préférentiellement par spectrométrie de masse.

Ces méthodes de mesure évaluent le rapport des isotopes ¹⁴C/¹²C dans l'échantillon et le comparent à un rapport des isotopes ¹⁴C/¹²C dans un matériau d'origine biologique donnant le 100% standard, afin de mesurer le pourcentage de carbone organique de l'échantillon.

De préférence, le polymère de propylène selon l'invention comprend une quantité de carbone issu de matières premières renouvelables supérieure à 20%, de préférence supérieure à 50% en masse par rapport à la masse totale de carbone du polymère.

En d'autres termes, le polymère peut comporter au moins 0,24 10⁻¹⁰ % en masse de ¹⁴C, et de préférence au moins 0,6 10⁻¹⁰ % en masse ¹⁴C.

Avantageusement la quantité de carbone issue de matières premières renouvelables est supérieure à 75%, de préférence égale à 100% en masse par rapport à la masse totale de carbone du polymère.

De manière encore plus préférée, le polymère de propylène selon l'invention est greffé par au moins un monomère de greffage choisi parmi les acides carboxyliques insaturés et leurs dérivés fonctionnels, les acides dicarboxyliques insaturés ayant 4 à 10 atomes de carbone et leurs dérivés fonctionnels, les esters alkyliques en C1-C8, les dérivés esters glycidyliques des acides carboxyliques insaturés, les sels métalliques d'acides carboxyliques insaturés, et le polymère de propylène comprend une quantité de carbone issu de matières premières renouvelables supérieure à 20%, de préférence supérieure à 50% en masse par rapport à la masse totale de carbone du polymère du propylène.

Avantageusement la quantité du monomère de greffage représente au plus 10%, de préférence de 1000 ppm à 10 % en poids par rapport au poids total du polymère.

En tant que matières premières renouvelables, on pourra utiliser des matières végétales ; des matières d'origine animale ou des matières d'origine végétale ou animale issues de matériaux récupérés (matériaux recyclés).

Au sens de l'invention, les matières d'origine végétale contiennent au moins des sucres et/ou des polysaccharides tels que l'amidon, la cellulose ou l'hemi-cellulose.

Les matières végétales contenant des sucres sont essentiellement la canne à sucre et la betterave sucrière, on peut également citer l'érable, le palmier-dattier, le palmier à sucre, le sorgho, l'agave américain ; les matières végétales contenant des amidons sont essentiellement les céréales et légumineuses comme le maïs, le blé, l'orge, le sorgho, le froment, le riz, la pomme de terre, le manioc, la patate douce, ou encore les algues.

En tant que matières premières renouvelables, on peut également utiliser de la cellulose ou de l'hémicellulose qui, en présence des microorganismes adéquats, peuvent être transformées en matières comprenant du sucre. Parmi ces matières renouvelables, on compte la paille, le bois, le papier, qui peuvent provenir avantageusement de matériaux récupérés.

Parmi les matières issues de matériaux récupérés, on peut notamment citer les déchets végétaux ou organiques comprenant des sucres et/ou des polysaccharides.

De préférence les matières premières renouvelables sont des matières végétales.

Dans le cas des polysaccharides, la matière végétale mise en oeuvre se trouve généralement sous forme hydrolysée avant l'étape de fermentation. Cette étape préliminaire d'hydrolyse permet ainsi, par exemple, la saccharification de l'amidon pour le transformer en glucose, ou la transformation du sucrose en glucose.

La fermentation des matières renouvelables s'effectue en présence d'un ou plusieurs microorganismes adéquats, ce microorganisme peut éventuellement avoir été modifié naturellement par une contrainte chimique ou physique, ou génétiquement on parle alors de mutant.

Avantageusement le microorganisme utilisé est *Clostridium beijerinckii* ou un de ses mutants de préférence immobilisés sur un support du type fibre polymère ou calcium. Cette fermentation permet l'obtention d'un mélange d'alcools comprenant de l'éthanol, de l'isopropanol et du 1-butanol. Les alcools obtenus peuvent être extraits en continu à l'aide d'une membrane de pervaporation ; un avantage de l'utilisation de ce type de membrane est de permettre une meilleure conservation des microorganismes, car ceux-ci sont détruits lorsque leur concentration devient trop élevée.

D'autres micro-organismes pouvant être utilisés sont *Clostridium aurantibutyricum ou Clostridium butylicum* ainsi que leurs mutants. La fermentation de ces matières premières conduit essentiellement à la production d'isopropanol et/ou de butanols avec éventuellement de l'acétone.

Selon une première variante, l'alcool obtenu est essentiellement l'isopropanol.

L'étape de fermentation est avantageusement suivie d'une étape de purification par exemple une distillation destinée à séparer l'isopropanol des autres alcools.

Selon cette première variante, à l'étape b) est mise en oeuvre la déshydratation de l'isopropanol pour produire, dans un premier réacteur, au moins du propylène ou un mélange d'alcènes comprenant du propylène, le produit secondaire de la déshydratation étant de l'eau.

Généralement, la déshydratation est effectuée en présence d'oxygène et d'eau à l'aide d'un catalyseur à base d'alpha-alumine comme le catalyseur commercialisé par EUROSUPPORT sous la dénomination commerciale ESM 110 ® (alumine trilobique non dopée contenant peu -environ 0,04%- de Na₂O résiduel).

Les conditions opératoires de la déshydratation font partie des connaissances générales de l'homme du métier, à titre indicatif, la déshydratation est généralement effectuée à une température de l'ordre de 400°C.

Un avantage de ce procédé selon l'invention est son économie en énergie : les étapes de fermentation et déshydratation du procédé selon l'invention sont effectuées à des températures relativement basses, inférieures à 500°C, de préférence inférieures à 400°C, en comparaison l'étape de craquage et de vapocraquage du pétrole en propylène s'effectue à une température de l'ordre de 800°C.

Cette économie d'énergie s'accompagne aussi d'une diminution du taux de CO₂ émis dans l'atmosphère.

Selon une deuxième variante, qui peut être mise en oeuvre suite à une fermentation au moyen de *Clostridium beijerinckii* ou un de ses mutants, on obtient un mélange d'alcools comprenant au moins de l'éthanol et du 1-butanol.

Avantageusement, l'étape de fermentation est suivie d'une étape de purification par exemple une distillation destinée à séparer l'éthanol et le 1-butanol des autres alcools.

Selon cette deuxième variante, l'étape b) est mise en oeuvre au moyen d'une série de réacteurs :
▪ dans une première partie de la série de réacteurs (située en entrée de la série de réacteurs dans le sens du passage des fluides) est effectuée la déshydratation de l'éthanol et du 1-butanol en vue de produire au moins de l'éthylène et du 1-butène, cette déshydratation étant effectuée dans les mêmes conditions que la déshydratation de l'isopropanol décrite ci-dessus ;
▪ dans une seconde partie de cette première série de réacteurs (située dans la partie intermédiaire de la série de réacteurs) est effectuée une réaction d'hydro-isomérisation du 1-butène en 2-butène,
▪ dans une troisième partie de cette première série de réacteurs (située en sortie de la série de réacteurs dans le sens du passage des fluides) est effectuée la métathèse de l'éthylène et du 2-butène pour former du propylène.

Les détails des réactions d'hydro-isomérisation et de métathèse sont par exemple mentionnés dans la demande de brevet FR 2 880 018.

La réaction d'hydro-isomérisation du 1-butène en 2-butène s'effectue généralement à l'aide d'une composition catalytique comprenant un composé d'un métal de transition du groupe VIII et plus particulièrement du palladium ou du nickel. La composition catalytique peut également comprendre un sel d'ammonium et/ou de phosphonium quaternaire ce qui permet d'effectuer la réaction à une température relativement basse, en système fermé, semi-fermé ou en continu.

La réaction de métathèse est effectuée par passage des réactifs au contact d'un lit de catalyseur, la métathèse est en général réalisée en continu et comprend une phase de réaction et une phase de régénération. Les catalyseurs utilisés contiennent de l'oxyde de rhénium sur alumine ou un composé dérivé d'alumine comme par exemple une silice-alumine ou un oxyde de bore-alumine.

De manière préférée, le microorganisme utilisé est *Clostridium beijerinckii* ou un de ses mutants, ce microorganisme peut en effet être utilisé pour mettre en oeuvre la première variante et la deuxième variante, ainsi le procédé peut être mis en oeuvre en utilisant l'isopropanol et/ou la combinaison de l'éthanol et du 1-butanol.

Les étapes éventuelles de purification (purification de(s) alcool(s) obtenus à l'étape a), purification de(s) alcène(s) obtenus à l'étape b)) sont avantageusement conduites par absorption sur des filtres classiques tels que tamis moléculaires, zéolithes, noir de carbone....

Avantageusement, on effectue au moins une étape de purification lors de l'étape a) et/ou de l'étape b) afin d'obtenir du propylène de degré de pureté suffisant pour effectuer une polymérisation ou une copolymérisation. On préfèrera obtenir du propylène de degré de pureté supérieure à 85% en poids, de préférence à 95% en poids, de manière préférée à 99% en poids et tout préférentiellement à 99,9% en poids.

Les principales impuretés présentes dans le propylène issu de ces déshydratations sont l'acétone, le di-isopropyléther, l'acétaldéhyde, le 1-propanol et l'hydrogène.

Avantageusement, le propylène est purifié, c'est-à-dire que l'acétone, le di-isopropyléther, l'acétaldéhyde, le 1-propanol et l'hydrogène devront être éliminés pour pouvoir polymériser facilement à l'étape c).

L'hydrogène qui a une température d'ébullition très inférieure à celle du propylène peut être isolé en comprimant le gaz puis en le refroidissant légèrement, par exemple à 19 bars et -33°C.

Le propylène, l'acétone, le di-isopropyléther, l'acétaldéhyde, le 1-propanol peuvent être séparés en mettant en oeuvre une ou plusieurs distillations à basse température.

Les températures d'ébullition à pression atmosphérique de ces composés sont les suivantes :

| composé | température d'ébullition (°C) |
|---|---|
| propylène | -47,7 |
| acétaldéhyde | 20,8 |
| acétone | 56 |
| diisopropyléther | 68 |
| 1-propanol | 97 |

Le propylène, l'acétone, le di-isopropyléther, l'acétaldéhyde, le 1-propanol sont refroidis à pression atmosphérique à environ -50°C, de préférence -47,7°C puis distillés pour extraire le propylène. On peut éventuellement faire cette distillation sous pression afin de pouvoir extraire le propylène à plus haute température.

Un autre avantage du procédé selon la présente invention concerne les impuretés. Les impuretés présentes dans le propylène issu de la déshydratation des alcools sont totalement différentes de celles présentes dans le propylène issu de craquage ou vapocraquage. En particulier parmi les impuretés présentes dans le propylène issu de craquage ou vapocraquage, on compte le méthylacéthylène et le propadiène.

Avec le procédé selon la présente invention, on obtient également du méthylacéthylène et propadiène mais ces composés sont alors présents dans des quantités nettement inférieures. Cette différence permet de limiter les risques liés au caractère très réactif du méthylacéthylène et également de limiter les réactions secondaires d'oligomérisation.

Un autre avantage est que le procédé selon l'invention peut être mis en oeuvre dans des unités de production localisées sur le lieu de production des matières premières. En outre, la taille des unités de production du procédé selon l'invention est beaucoup plus petite que la taille d'une raffinerie : les raffineries sont en effet de grosses installations situées généralement loin des centres de production des matières premières et alimentées par des pipelines.

Toutes ces différences contribuent à rendre le procédé selon l'invention plus économique (économie de matériel et économie d'énergie qui s'accompagne aussi d'une diminution du taux de CO₂ émis dans l'atmosphère) que les procédés classiques d'obtention du propylène.

Il existe essentiellement deux types de procédés de polymérisation pour la production des polymères du propylène : les procédés en phase liquide notamment en suspension et les procédés en phase gazeuse. En outre, ces procédés peuvent être combinés par exemple un ou deux réacteurs mettant en oeuvre une polymérisation dans du propylène liquide puis un ou deux réacteurs mettant en oeuvre une polymérisation en phase gazeuse.

Parmi les procédés de polymérisation en suspension -« slurry processes » en langue anglaise-, on compte la polymérisation en suspension dans un solvant et la polymérisation en suspension dans le propylène liquide- « bulk ou mass processes ».

Au fil des années, les procédés de polymérisation du propylène se sont simplifiés notamment grâce aux améliorations apportées aux systèmes catalytiques, on compte aujourd'hui cinq générations de catalyseurs. Les principales améliorations ont porté sur l'amélioration du rendement, de la stéréospécificité. Les nouveaux catalyseurs ont également permis d'éviter les étapes d'extraction du polypropylène atactique et d'extraction des résidus catalytiques.

Aujourd'hui on utilise essentiellement des catalyseurs (Ziegler-Natta) de 4^{ème} et 5^{ème} générations, ainsi que les catalyseurs « métallocène ».

Les catalyseurs de 4^{ème} génération consistent en des donneurs phtalate/silicium et un support sphérique qui est utilisé pour un monomère fluide dans un réacteur homopolymère ; les catalyseurs de 5^{ème} génération sont basés par exemple sur une technologie de donneurs diéther et succinate.

Les catalyseurs « métallocène » sont des catalyseurs mono-sites. Ce sont essentiellement des catalyseurs ZrCl₂ supportés sur silice et généralement mis en oeuvre en combinaison avec un cocatalyseur tel que le méthylaluminoxane (MAO). Ces catalyseurs peuvent être utilisés en combinaison avec des catalyseurs Ziegler-Natta.

La polymérisation en suspension est traditionnellement mise en oeuvre en utilisant un hydrocarbure organique (généralement l'hexane) permettant l'extraction du polypropylène atactique et des résidus catalytiques. Le polymère produit dans le réacteur est insoluble dans l'hydrocarbure formant ainsi une suspension. Un séchage permet d'éliminer les dernières traces de solvant restant sur la poudre de polymère. La température est de l'ordre de 50 à 100°C et la pression de quelques bars.

La polymérisation en suspension dans le propylène liquide (polymérisation en masse) diffère essentiellement de la polymérisation en suspension dans un hydrocarbure organique par le choix du diluant. L'avantage principal réside dans l'absence de séparation ou de purification des hydrocarbures.

La polymérisation en suspension dans le propylène liquide peut être mise en oeuvre dans un réacteur agité bouillonnant ou dans un réacteur torique en boucle.

Dans le réacteur agité bouillonnant, la pression du réacteur va de 2,5 à 3,5 MPa, ce qui correspond à des températures de 65°C à 75°C.

Dans le réacteur torique en boucle la température va de 60°C à 80°C, pour une pression allant de 3,5 à 4 MPa.

La polymérisation en phase gazeuse peut être effectuée en lit agité mécaniquement (avec courant ascendant ou horizontal) ou en lit fluidisé, la polymérisation s'effectue entre 50 et 105°C à des pressions de 3 à 5MPa.

Tous ces procédés conviennent à la mise en oeuvre des polypropylènes (homopolymère, copolymère statistique ou copolymère séquencé).

Dans le cas où le polypropylène est un copolymère statistique ou séquencé, la quantité massique de propylène par rapport à la masse totale du copolymère est avantageusement supérieure à 10%, préférentiellement supérieure à 50%, de manière toute préférée supérieure à 90%.

Les polypropylènes ont avantageusement une température de fusion comprise dans la gamme allant de 140 à 190°C.

De préférence, le polypropylène (homopolymère ou copolymère) sera obtenu en mettant en oeuvre une polymérisation en phase gazeuse, en lit fluidisé.

Le polypropylène copolymère séquencé (block) est obtenu en au moins deux étapes, chacune étant réalisée avec un catalyseur spécifique.

On citera à titre d'exemple les documents suivants.

US 5,449,738 décrit un procédé de production de copolymères séquencés éthylène-propylène en phase gazeuse comprenant :
▪ une première étape de polymérisation du propylène ou d'un mélange d'éthylène et de propylène mise en oeuvre en utilisant un ou plusieurs réacteurs munis d'un système catalytique consistant essentiellement :
   (A) un catalyseur solide contenant du magnésium, du titane et un halogène,
   (B) un composé organoaluminium, et
   (C) un composé du silicium de formule R¹R²Si(OR³)₂ dans laquelle R¹ est l'hydrocarbure alicyclique en C₅-C₂₀, R² et R³, indépendamment l'un de l'autre, étant des groupes hydrocarbonés en C₁-C₂₀ ;
▪ une deuxième étape de polymérisation d'un mélange d'éthylène et de propylène en présence du produit de polymérisation obtenu à l'issue de la première étape et de l'addition d'un deuxième composé du silicium (D) de formule R⁴R⁵ₐ Si(OR⁶)₃₋ₐ dans laquelle R⁴ est un hydrocarbure aromatique en C₆-C₂₀, R⁵ est un groupe hydrocarboné en C₁-C₂₀ ou un hydrocarbure aromatique en C₆-C₂₀, R⁶ est un groupe hydrocarboné en C₁-C₂₀, a est égal à 0 ;1 ou 2.

US 5 473 021 décrit un procédé de production de copolymères séquencés éthylène-propylène qui peut être mis en oeuvre en phase gazeuse ou en phase liquide en suspension de préférence dans un solvant inerte. Ce procédé comprend :
▪ une première étape semblable à la première étape mise en oeuvre dans le procédé décrit dans le brevet US 5,449,738 et,
▪ une deuxième étape consistant à mettre en contact un mélange d'éthylène et de propylène en présence du produit de polymérisation obtenu à l'issue de la première étape et en présence des composés (A), (B), (C) décrits dans le brevet US 5,449,738 et d'un composé du silicium (D') de formule R⁴ₐ Si(OR⁵)₄₋ₐ dans laquelle R⁴ et R⁵, indépendamment l'un de l'autre, sont des groupes hydrocarbonés en C₁-C₂₀, a est égal à 0 ;1 ; 2 ou 3.

US 6 117 946 décrit une méthode de production d'un copolymère de propylène, de 1-butène et éventuellement d'éthylène au moyen d'un catalyseur Ziegler-Natta en phase gazeuse, en l'absence d'un solvant inerte. Suivant ce procédé, une première étape est mise en oeuvre pour produire un copolymère ethylène-propylène-1 butène ou un copolymère propylène-1 butène comprenant au plus 3% poids d'éthylène et de 3 à 25 % poids de 1 butène, le rendement de la polymérisation lors de la première étape étant comprise entre 40 et 85% par rapport au rendement total de la polymérisation et une deuxième étape de polymérisation de propylène, de 1 butène et éventuellement d'éthylène est ensuite mise en oeuvre en présence du polymère obtenu à la première étape contenant du catalyseur pour produire un copolymère ethylène-propylène-1 butène ou un copolymère propylène-1 butène comprenant au plus 17% poids d'éthylène et de 3 à 35 % poids de 1 butène, le rendement de la polymérisation lors de la deuxième étape étant comprise entre 15 et 60% par rapport au rendement total de la polymérisation.

On peut citer comme polymère statistique les caoutchoucs éthylène-propylène.

US 5 342 907 présente un procédé de fabrication de caoutchoucs éthylène-propylène (EPR, EPDM) en phase gazeuse à l'aide d'un système catalytique comprenant un précurseur de catalyseur qui est un triacétylacétonate de vanadium éventuellement déposé sur un support, un cocatalyseur consistant essentiellement en (i) un halogénure d'alkylaluminium et (ii) éventuellement un trialkylaluminium, et un activateur qui est un ester chloré.

Avec les monomères et le catalyseur, on peut éventuellement introduire un agent de transfert, cet agent de transfert peut être par exemple, le dihydrogène, un alcane tel que le butane et le pentane, un aldéhyde tel que le propionaldéhyde et l'acétaldéhyde, une cétone telles que l'acétone et la méthyle éthyle cétone. En ajoutant cet agent de transfert on peut limiter la masse molaire du polymère fabriqué. La masse molaire moyenne en nombre du polymère est généralement comprise entre 1000 et 100000g/mol.

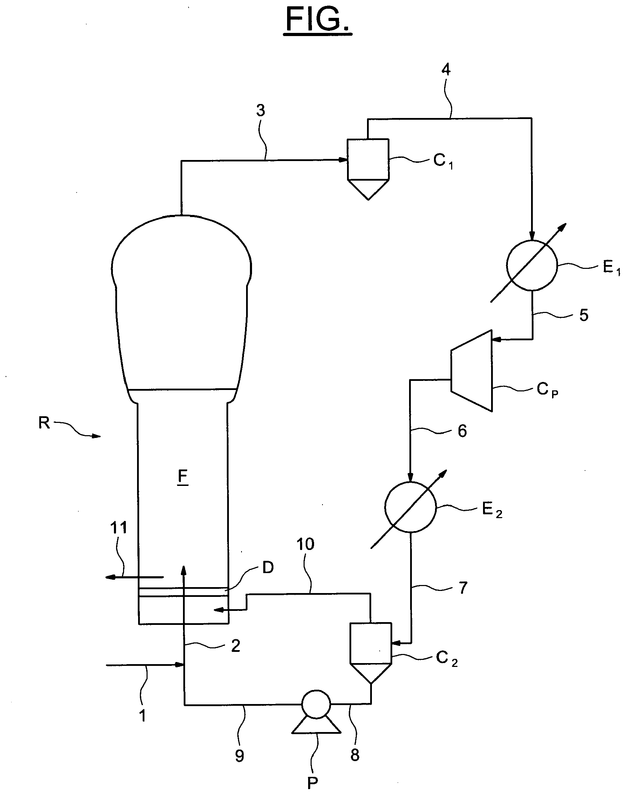

Sur la figure unique jointe en annexe est présenté un dispositif permettant la mise en oeuvre du procédé de (co)polymérisation selon l'invention en lit fluidisé.

Cette mise en oeuvre ne constitue en aucun cas une limitation de l'étape de polymérisation du procédé selon la présente invention.

Cette mise en oeuvre est effectuée au moyen du dispositif suivant comprenant un réacteur R, et un circuit de recyclage des gaz comprenant deux séparateurs de type cyclone C1 et C2, deux échangeurs de chaleur E1 et E2, un compresseur Cp, une pompe P.

Le réacteur R comprend une plaque de distribution (ou distributeur) D qui délimite une zone inférieure qui est une zone d'admission des gaz et liquides et une zone supérieure F où est situé le lit fluidisé.

Le distributeur D est une plaque dans laquelle sont aménagés des trous, ce distributeur est destiné à homogénéiser le débit des gaz entrant dans le réacteur.

Selon cette mise en oeuvre un mélange de propylène et de comonomère (éthylène) est introduit par la conduite 1, puis par la conduite 2 dans le réacteur où est effectuée la polymérisation en lit fluidisé.

Le lit fluidisé comprend le catalyseur et des particules de copolymères statistiques préformées, ce lit est maintenu dans un état fluidisé à l'aide d'un courant de gaz ascendant provenant du distributeur D. Le volume du lit fluidisé est maintenu constant par soutirage du copolymère formé au moyen de la conduite de décharge 11.

La copolymérisation est une réaction exothermique, la température à l'intérieur du réacteur est maintenue constante en contrôlant la température du gaz (recyclé) introduit dans le réacteur par la conduite 10.

Le gaz comprenant les molécules de propylène et d'éthylène qui n'ont pas réagi et éventuellement un agent de transfert (par exemple l'hydrogène) sort du réacteur et entre dans le circuit de recyclage par la conduite 3. Ce gaz est traité dans le séparateur de type cyclone C1 pour éliminer les éventuelles fines particules de polymère qui auraient pu être entraînées. Le gaz traité est ensuite introduit par la conduite 4 dans un premier échangeur de chaleur E1 où il est refroidi.

Le gaz sort de l'échangeur de chaleur E1 par la conduite 5, entre dans un compresseur Cp, le fluide ressort par la conduite 6.

Le fluide est refroidi dans un deuxième échangeur de chaleur E2 de manière à condenser les comonomères. La conduite 7 amène le fluide de l'échangeur E2 au séparateur de type cyclone C2.

Les gaz sont séparés des liquides dans le séparateur de type cyclone C2, les liquides sortent du séparateur de type cyclone C2 par la conduite 10 et sont introduits dans le réacteur R, les gaz sortent du séparateur de type cyclone C2 par la conduite 8 entrent dans la pompe P puis sont introduit par la conduite 9, puis par la conduite 2 dans le réacteur.

Ce copolymère propylène-éthylène a été préparé à partir de propylène obtenu en mettant en oeuvre les étapes a) et b) selon le procédé de la présente demande.

Le polymère de propylène obtenu est ensuite isolé. Puis le polymère est ensuite conduit soit vers une extrudeuse, soit vers un autre réacteur où il subira un autre traitement tel que par exemple un greffage.

De préférence le polymère de propylène isolé est ensuite greffé.

Comme décrit dans la suite, le greffage du polypropylène est effectué avec au moins un monomère de greffage choisi parmi les acides carboxyliques insaturés ou leurs dérivés fonctionnels, les acides dicarboxyliques insaturés ayant 4 à 10 atomes de carbone et leurs dérivés fonctionnels, les esters alkyliques en C₁-C₈ ou les dérivés esters glycidyliques des acides carboxyliques insaturés, les sels métalliques d'acides carboxyliques insaturés.

Le polymère peut être greffé avec un acide carboxylique insaturé. On ne sortirait pas du cadre de l'invention en utilisant un dérivé fonctionnel de cet acide

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Les acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent les esters alkyliques en C₁-C₈ ou les dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère le méthacrylate de glycidyle. De manière encore plus préférée, on préfère l'anhydride maléique.

Selon une variante particulière, on pourra utiliser de l'anhydride maléique comprenant des atomes de carbone d'origine renouvelable.

L'anhydride maléique peut être obtenu selon le procédé décrit dans la demande FR 0854896 de la Demanderesse, comprenant les étapes suivantes :
a) fermentation de matières premières renouvelables et, éventuellement purification pour produire un mélange comprenant au moins du butanol ;
a) oxydation du butanol en anhydride maléique à une température généralement comprise entre 300 et 600 °C, au moyen d'un catalyseur à base d'oxydes de vanadium et/ou de molybdène ;
b) isolation de l'anhydride maléique obtenu à l'issue de l'étape b).

Divers procédés connus peuvent être utilisés pour greffer un monomère de greffage sur le polypropylène. Le mélange peut contenir les additifs utilisés habituellement lors la mise en oeuvre des polyoléfines à des teneurs comprises entre 10 ppm et 5%, tels que les antioxydants par exemple à base de molécules phénoliques substituées etc..., les agents de protections UV, les agents de mise en oeuvre tels que par exemple les amides gras, l'acide stéarique et ses sels, les polymères fluorés (connus comme agents pour éviter les défauts d'extrusion), les agents anti- buée à base d'amines, les agents anti-bloquants tels que la silice ou le talc, les mélanges maîtres avec colorants, les agents nucléants...

Ceci peut être réalisé en chauffant le polymère à température élevée, environ 100°C à environ 300°C, en présence ou en l'absence d'un solvant avec ou sans générateur de radicaux.

Des solvants ou leurs mélanges appropriés qui peuvent être utilisés dans cette réaction sont le benzène, toluène, xylène, chlorobenzène, cumène, etc. Le dioxyde de carbone dans son état liquide et/ou supercritique est également considéré comme un solvant ou cosolvant dans ce type de procédé.

Des générateurs de radicaux appropriés qui peuvent être utilisés comprennent les peroxydes, préférentiellement les peroxy esters, les peroxydes de dialkyl, les hydroperoxydes ou les peroxycétals. Ces peroxydes sont commercialisés par ARKEMA sous la marque Luperox®. On peut citer comme exemples de peroxy esters le t-butyl peroxy-2-ethylhexanoate (Luperox 26), le t-butyl peroxyacetate (Luperox 7), le t-amyl peroxyacetate (Luperox 555), le t-butyl perbenzoate (Luperox P), le t-amyl perbenzoate (Luperox TAP) et le OO-t-butyl 1-(2-ethylhexyl)monoperoxycarbonate (Luperox TBEC). A titre de peroxydes de dialkyl, on peut citer le 2,5-dimethyl-2,5-di-(t-butylperoxy)hexane (Luperox 101), le dicumyl peroxyde (Luperox DC), l'alpha-alpha'-bis (t-butylperoxy) diisopropylbenzene (Luperox F40), le di-t-butyl-peroxyde (Luperox DI), le di-t-amyl-peroxyde (Luperox DTA) et le 2,5-dimethyl-2,5-di-(t-butylperoxy)hexyne-3 (Luperox 130). Un exemple d'hydroperoxyde est le t-butyl-hydroperoxyde (Luperox TBH70). On peut utiliser par exemple comme peroxycétal le 1,1-di-(t-butylperoxy)-3,3,5-trimethylcyclohexane (Luperox 231), l'ethly-3,3-di-(t-butylperoxybutyrate) (Luperox 233) ou l'ethly-3,3-di-(t-amylperoxybutyrate) (Luperox 533).

La réaction de greffage peut alors être réalisée selon un procédé batch en solution ou un procédé continu avec un outil de mélange en fondu.

Dans le cas d'un procédé batch de greffage en solution, le polypropylène dissout dans un solvant approprié cité ci-dessus est porté à température de réaction en présence du monomère et du générateur de radicaux. La température et le temps de réaction étant choisis en adéquation avec la cinétique de décomposition du générateur de radicaux, ce dernier pouvant être introduit en continu. Préférentiellement, on utilise une température allant de 50 à 200°C. On préfère utiliser comme générateur de radicaux pour le greffage en solution la famille des peroxy esters. Le traitement du polypropylène greffé est réalisé par précipitation dans un non-solvant de celui-ci.

Par non-solvant, on attend un solvant organique ou non, ou un mélange de solvants organiques ou non ne permettant pas de solubiliser plus de 10% du polymère greffé, à titre d'exemple on peut citer l'eau, les cétones, les alcools, les esters et leurs mélanges. A la suite de la précipitation, le polypropylène greffé est obtenu sous forme de poudre ou d'agglomérats par filtration et séchage. Eventuellement, le polypropylène greffé peut subir une étape supplémentaire, dite de lavage, par extraction solide-liquide entre lui-même et un non-solvant précédemment cité.

Dans le cas d'un procédé de greffage continu, on utilise un outil d'extrusion des matières plastiques à l'état fondu connu de l'homme de l'art. A titre d'exemple, on peut citer les mélangeurs internes, les mélangeurs à cylindre, les extrudeuses monovis, bi-vis contra ou co-rotatives, les co-malaxeurs continus. L'outil de greffage peut être l'un des outils cités ci-dessus ou leur association, comme par exemple un comalaxeur associé à une monovis de reprise, une bi-vis corotative associée à une pompe à engrenage. Dans le cas d'une extrusion, l'outil est configuré de manière à identifier une zone de fusion du polymère, une zone de mélange et réaction entre les espèces présentes et une zone de détente/dégazage pour éliminer les composés volatils. Ces différentes zones peuvent être matérialisées par la configuration de la vis de l'outil, l'utilisation de zone de restriction, ou l'accouplement d'outils entre eux. L'outil est également équipé d'un système de filtration et/ou d'un système de granulation à joncs ou sous eau.

Le polypropylène est introduit dans l'outil dont la température du corps est régulée, cette température étant choisie en adéquation avec la cinétique de décomposition du générateur de radicaux. On préfère utiliser comme générateur de radicaux pour le greffage continu les familles des peroxydes de dialkyl, des hydroperoxydes ou des peroxycétals. Préférentiellement, on utilise une température allant de 100 à 300°C, plus préférentiellement de 200 à 280°C.

Le polypropylène, le monomère de greffage et le générateur de radicaux peuvent être introduit simultanément ou séparément dans l'outil d'extrusion. En particulier, le monomère et le générateur de radicaux peuvent être introduit simultanément avec le polymère en alimentation principale, soit séparément en injection liquide le long de l'outil, ensemble ou séparément l'un de l'autre.

A l'étape d'injection, on peut associer au monomère et/ou au générateur de radicaux une fraction d'un solvant tel que ceux cités précédemment. Cette fraction de solvant a pour but de faciliter le mélange entre les espèces réactives ainsi que l'élimination des composés volatils lors de l'étape de dégazage.

A l'étape de détente/dégazage, on applique un vide adapté à la dévolatilisation des composés volatils et au polypropylène. Le niveau de vide pouvant aller quelques millibars à plusieurs centaines.

Enfin, le polypropylène greffé est récupéré en sortie de l'outil d'extrusion sous forme de granulés à l'aide d'un outil de granulation.

Dans le polymère modifié par greffage obtenu de la façon susmentionnée, la quantité du monomère de greffage peut être choisie d'une façon appropriée mais elle est de préférence de 1000 ppm à 10%, mieux de 6000 ppm à 50000 ppm, par rapport au poids de polymère greffé.

Selon un mode de l'invention, on effectue un greffage sur un mélange de polypropylène selon l'invention non greffé et d'un autre polymère appelé « polymère de cogreffage », le mélange est introduit dans l'outil d'extrusion avec un monomère de greffage et un générateur de radicaux. Le polymère de cogreffage est différent du polypropylène selon l'invention c'est-à-dire qu'il n'a pas les mêmes caractéristiques.

En particulier le polymère de cogreffage peut être un polypropylène, il s'agit alors d'un polypropylène de température de fusion et/ou teneur en ¹⁴C différente(s) de celle(s) du polypropylène selon l'invention.

On peut cependant utiliser tout type de polymères comme polymère de cogreffage. Comme exemples de polymères de cogreffage on peut citer les élastomères, les homopolymères et copolymères de type polystyrène comme les copolymères à base de styrène tels que les SBR (styrène-butadiène-rubber), les copolymères blocs styrène/butadiène/styrène (SBS), les copolymères blocs styrène/éthylène/butadiène/styrène (SEBS) et les copolymères blocs styrène/isoprène/styrène (SIS). On peut également citer les homopolymères et copolymères de l'éthylène, les copolymères éthylène-ester vinylique d'acide carboxylique comme le copolymère éthylène-acétate de vinyle, les copolymères éthylène-ester d'acide (méth)acrylique insaturés ou les copolymères éthylène-acide (méth)acrylique insaturés. De préférence, le polymère de cogreffage est de type polystyrène ou de type polyoléfine.

La quantité du monomère greffé est déterminée par dosage des fonctions succiniques par spectroscopie IRTF. Le MFI ou indice d'écoulement à l'état fondu du polymère greffé, est compris entre 0,1 et 50 g/ 10 min (ASTM D 1238-190°C-2,16 kg), avantageusement entre 1,5 et 20 g/10min.

La présente invention concerne les compositions comprenant du polypropylène, obtenu à partir de matières d'origine renouvelable non greffé et les compositions comprenant du polypropylène obtenu à partir de matières d'origine renouvelable, ledit polypropylène étant greffé, ainsi que les compositions comprenant au moins un copolymère comprenant du propylène obtenu à partir de matières d'origine renouvelable.

Ces compositions peuvent comprendre au moins un additif pour améliorer les propriétés du matériau final.

Parmi ces additifs, on compte les antioxydants ; les agents de protection UV ; agents dits « de mise en oeuvre » ayant pour fonction d'améliorer l'aspect du polymère final lors de sa mise en oeuvre telles que les amides grasses, l'acide stéarique et ses sels, l'éthylène bis-stéaramide ou les polymères fluorés ; les agents anti-buée ; les agents anti-bloquants tels que la silice ou le talc ; les charges telles que le carbonate de calcium et les nanocharges comme par exemple les argiles ; les agent de couplage tels les silanes ; les agents réticulants comme les peroxydes ; les agents antistatiques ; les agents nucléants ; les pigments ; les colorants. Ces additifs sont généralement utilisés dans des teneurs comprises entre 10 ppm et 100 000 ppm en poids par rapport au poids du copolymère final. Les compositions peuvent comprendre également des additifs choisis parmi les plastifiants, les fluidifiants, les additifs retardateurs de flamme, tels les hydroxydes d'aluminium ou de magnésium (ces derniers additifs peuvent atteindre des quantités bien supérieures à 100000 ppm). Certains de ces additifs peuvent être introduits dans la composition sous forme de mélanges-maîtres. La présente demande de brevet vise plus particulièrement plusieurs familles de compositions qui peuvent être utiles en tant que liants ou adhésifs, particulièrement en coextrusion, notamment dans des structures multicouches ou encore comme agent de couplage.

Quelques modes de réalisation des compositions selon l'invention sont décrits ci-dessous.

Un premier type de compositions comprend :
▪ un polymère choisi parmi le polypropylène, un copolymère comprenant du propylène ou un mélange de ces polymères, le propylène utilisé dans ce polymère étant au moins en partie obtenu à partir de matières d'origine renouvelable, ce polymère étant greffé par au moins un des monomères de greffage décrits ci-dessus, avantageusement le polymère ne comprend pas plus de 5% en poids de monomères de greffage.
▪ éventuellement un polymère non greffé choisi parmi le polypropylène, un copolymère comprenant du propylène ou un mélange de ces polymères, le propylène utilisé dans ce polymère étant éventuellement au moins en partie obtenu à partir de matières d'origine renouvelable.

Un deuxième type de compositions comprend :
A) de 1 à 35 % en poids d'un polymère choisi parmi le polypropylène, un copolymère de propylène et d'une alpha-oléfine ou un mélange de ces polymères, le propylène utilisé dans ce polymère étant au moins en partie obtenu à partir de matières d'origine renouvelable, ce polymère étant, greffé par au moins un des monomères de greffage décrits ci-dessus ;
B) de 15 à 99 % en poids d'un polymère non greffé choisi parmi le polypropylène, un copolymère de propylène et d'une alpha-oléfine ou un mélange de ces polymères,
C) de 0 à 50 % d'au moins un modifiant choisi parmi le polyéthylène, le poly-1-butène, le polystyrène, les copolymères de l'éthylène avec au moins un monomère choisi parmi les alpha-oléfines, les acides carboxyliques insaturés ou leurs dérivés, ces dérivés étant par exemple les anhydrides d'acide carboxylique insaturés, les esters d'acides carboxyliques insaturés ou les esters vinyliques d'acides carboxyliques saturés, les polymères à caractère élastomérique.

L'alpha-oléfine utilisée dans la synthèse du copolymère de propylène est avantageusement l'éthylène ou un butène tels que l'isobutène ou le 1-butène, de manière particulière l'alpha-oléfine utilisée dans les copolymères est une alpha oléfine en C₃ à C₃₀, de densité allant de 0,86 à 0,960 par exemple choisie parmi l'éthylène, le propylène, le 1-butène, l'isobutène, l'héxène, l'octène.

Un troisième type de compositions comprend :
A) un mélange comprenant de 50 à 98 % en poids d'un polymère choisi parmi le polypropylène, un copolymère de propylène et d'une alpha-oléfine ou un mélange de ces polymères, le propylène utilisé dans ce polymère étant au moins en partie obtenu à partir de matières d'origine renouvelable, de 2 à 50 % en poids d'un polymère tel que par exemple un polyéthylène de densité allant de 0,86 à 0,960, le polystyrène, ce mélange étant cogreffé par au moins un des monomères de greffage décrits ci-dessus ;
B)éventuellement au moins un polymère choisi parmi le polyéthylène ou un copolymère de l'éthylène et d'une alpha-oléfine, le polypropylène ou un copolymère de propylène et d'une alpha-oléfine, le poly-1-butène ou un copolymère du 1-butène et d'une alpha-oléfine, le polystyrène, ou un mélange de ces polymères, les
C)éventuellement au moins un modifiant choisi parmi les copolymères de l'éthylène avec un monomère choisi parmi les esters d'acides carboxyliques insaturés ou les esters vinyliques d'acides carboxyliques saturés, les polymères à caractère élastomérique.

Les compositions présentées ci-dessus pourront présenter les caractéristiques suivantes.

Le propylène utilisé dans le polymère non greffé peut au moins en partie être obtenu à partir de matières d'origine renouvelable.

Avantageusement les polymères de propylène greffés des compositions selon l'invention ne comprennent pas plus de 5% en poids de monomères de greffage.

Les copolymères de l'éthylène avec au moins un ester d'acides carboxyliques insaturés ou au moins un ester vinylique d'acides carboxyliques saturés seront tels que :
▪ les esters d'acides carboxyliques insaturés sont choisis parmi les (méth)acrylates d'alkyle dont l'alkyle a de 1 à 24 atomes de carbone, tels que par exemple le méthacrylate de méthyle, l'acrylate d'éthyle, l'acrylate de n-butyle, l'acrylate d'isobutyle, l'acrylate de 2-éthylhexyle,
▪ les esters vinyliques d'acides carboxyliques saturés étant choisi parmi l'acétate et le propionate de vinyle ; parmi ces copolymères on compte notamment les copolymères acrylate ou éthylène/acrylate/anhydride maléique, les copolymères éthylène/ acétate de vinyle, les copolymères éthylène/ acétate de vinyle/ anhydride maléique

Les polymères à caractère élastomérique seront notamment ceux définis dans la norme ASTM D412, c'est-à-dire un matériau qui peut être étiré à température ambiante à deux fois sa longueur, maintenu ainsi 5 minutes puis qui revient, à moins de 10 % près, à sa longueur initiale après avoir été relâché ; on entend également par « polymère à caractère élastomérique », un polymère n'ayant pas exactement les caractéristiques précédentes mais pouvant être étiré et revenir sensiblement à sa longueur initiale.

A titre d'exemple de polymères à caractère élastomérique , on peut citer :
▪ les EPR (éthylène propylène rubber aussi désignés (EPM) et les EPDM (éthylène propylène diène),
▪ les élastomères styréniques tels que les SBR (styrène-butadiène-rubber), les copolymères blocs styrène/butadiène/styrène (SBS), les copolymères blocs styrène/éthylène/butadiène/styrène (SEBS) et les copolymères blocs styrène/isoprène/stryrène (SIS).

Dans les compositions décrites ci-dessus lorsque l'anhydride maléique est utilisé, on pourra utiliser de l'anhydride maléique comprenant des atomes de carbone d'origine renouvelable.

L'anhydride maléique peut être obtenu selon le procédé décrit dans la demande FR 0854896 de la Demanderesse, comprenant les étapes suivantes :
a) fermentation de matières premières renouvelables et, éventuellement purification pour produire un mélange comprenant au moins du butanol ;
b) oxydation du butanol en anhydride maléique à une température généralement comprise entre 300 et 600 °C, au moyen d'un catalyseur à base d'oxydes de vanadium et/ou de molybdène ;
c) isolation de l'anhydride maléique obtenu à l'issue de l'étape b).

Dans les compositions décrites ci-dessus lorsqu'un ester de vinyle est utilisé, on pourra utiliser un ester de vinyle comprenant des atomes de carbone d'origine renouvelable. Les esters de vinyle peuvent être obtenus selon le procédé décrit dans la demande FR 0854976 de la Demanderesse.

La présente demande vise encore les utilisations des polypropylènes selon l'invention, en particulier des polypropylènes greffés et des compositions comprenant au moins un polypropylène selon l'invention.

La présente demande vise en particulier les utilisations des polypropylènes greffés selon l'invention en tant qu'adhésif et les compositions comprenant les polypropylènes greffés selon l'invention en tant que compositions adhésives utilisables notamment, en coextrusion, en extrusion couchage ou en extrusion-lamination. Ces adhésifs présentent une adhésion à de nombreux supports tels que les métaux comme l'aluminium ou les polymères comme les polyesters, les polyamides, les résines époxy, les polyoléfines, les polymères qui présentent des propriétés barrière à l'eau, aux gaz ou aux hydrocarbures comme les polymères d'éthylène et d'acétate de vinyle saponifié (EVOH).

La présente demande vise encore les utilisations des compositions en tant que compositions adhésives dans une structure multicouche ainsi que les structures multicouches ainsi obtenues.

Des structures multicouches, comprenant au moins une composition adhésive entre deux supports, préférées selon l'invention sont de type :
- polypropylène/ composition adhésive /EVOH ;
- polypropylène/ composition adhésive /aluminium ;
- polypropylène/ composition adhésive /EVOH/ composition adhésive /polypropylène ;
- polypropylène/ composition adhésive /PA ;
- polypropylène/ composition adhésive /PA/ composition adhésive /polypropylène ;
le « polypropylène » utilisé en tant que support dans ces structures multicouches est un polypropylène non greffé,
chacune de ces structures multicouches comprend au moins une composition adhésive contenant un polypropylène greffé selon la présente invention comprenant des atomes de carbones issus de matières premières renouvelables.

Ces structures sont avantageusement utilisées pour fabriquer des emballages par exemple des barquettes, des bouteilles ou des films.

La composition selon l'invention peut également être utilisée dans une structure multicouche entre une couche de polypropylène non greffé et une couche résine époxy/métal (c'est-à-dire une structure multicouche de type polypropylène/composition adhésive/résine époxy/métal) pour fabriquer des tubes de transfert de fluides, par exemple de pétrole ou de gaz.

Les polypropylènes greffés selon l'invention peuvent aussi être utilisés en tant qu'agent de couplage de composés (c'est-à-dire qu'ils permettent d'améliorer la dispersion desdits composés dans le polymère) dans une matrice polymère, en particulier polypropylène. Ces composés peuvent être les fibres naturelles, les fibres de verre, les charges renfort mécanique comme par exemple les argiles, les silicates, les carbonates, les titanates, les pigments ou les antioxydants. On peut également y ajouter d'autres composés tels que les plastifiants ou les fluidifiants ou les agents retardateurs de flamme tels que les hydroxydes métalliques, les phosphates, les polyphosphates ou les phosphonates.

Une autre application possible pour les copolymères selon l'invention est de fabriquer des mélanges-maîtres en utilisant les composés cités ci-dessus ou tout autre type d'additif.

Les polypropylènes greffés selon l'invention peuvent aussi être utilisés en tant que compatibilisant de polymères pour fabriquer des alliages par exemple polypropylène/polyamide (PP/PA), des alliages de polypropylène et d'EVOH ou les alliages polypropylène/amidon.

Une autre application du polypropylène greffé selon l'invention est la fabrication de câbles électriques.

## Revendications

1. Polymère du propylène greffé par au moins un monomère de greffage choisi parmi les acides carboxyliques insaturés ou leurs dérivés fonctionnels, les acides dicarboxyliques insaturés ayant 4 à 10 atomes de carbone et leurs dérivés fonctionnels, les esters alkyliques en C₁-C₈ ou les dérivés esters glycidyliques des acides carboxyliques insaturés, les sels métalliques d'acides carboxyliques insaturés, **caractérisé en ce qu'**il comprend une quantité de carbone issu de matières premières renouvelables (issues de ressource naturelle vivante - animaux ou végétaux - qui sont un mélange de 3 isotopes : le ¹²C représentant environ 98,892 %, le ¹³C environ 1,108 % et le ¹⁴C à l'état de traces: 1,2.10⁻¹⁰ %) supérieure à 20%, de préférence supérieure à 50% en masse par rapport à la masse totale de carbone du polymère du propylène, cette quantité de carbone issu de matières premières renouvelables étant mesurée selon la norme ASTM D 6866-06.

2. Polymère du propylène greffé selon la revendication 1 dans lequel la quantité du monomère de greffage représente au plus 10% en poids par rapport au poids total du polymère.

3. Polymère du propylène selon la revendication 1 ou 2 greffé avec un acide carboxylique insaturé ou un dérivé fonctionnel de cet acide.

4. Polymère du propylène selon l'une quelconque des revendications 1 à 3 greffé avec de l'anhydride maléique comprenant de préférence des atomes de carbone d'origine renouvelable.

5. Procédé de fabrication d'un polymère du propylène greffé selon l'une quelconque des revendications 1 à 4 comprenant les étapes suivantes :
a. fermentation de matières premières renouvelables, et éventuellement purification, pour produire un alcool ou un mélange d'alcools, ledit alcool ou mélange d'alcools comprenant au moins de l'isopropanol et/ou au moins un mélange d'éthanol et de 1-butanol,
b. déshydratation de l'alcool ou du mélange d'alcools obtenus en vue de produire, dans au moins un premier réacteur, un alcène ou un mélange d'alcènes, ledit alcène ou mélange d'alcènes comprenant au moins du propylène et, éventuellement purification du mélange d'alcènes pour obtenir du propylène,
c. polymérisation, dans au moins un second réacteur, du propylène, éventuellement en présence d'un comonomère, pour produire un polymère du propylène,
d. isolation du polymère du propylène obtenu à l'issue de l'étape c),
e. greffage du polymère du propylène obtenu à l'issue de l'étape d).

6. Procédé de fabrication d'un polymère du propylène selon la revendication 5, **caractérisé en ce que** les matières premières renouvelables sont des matières végétales choisies parmi la canne à sucre et la betterave sucrière, l'érable, le palmier-dattier, le palmier à sucre, le sorgho, l'agave américain, le maïs, le blé, l'orge, le sorgho, le froment, le riz, la pomme de terre, le manioc, la patate douce, les matériaux comprenant de la cellulose ou de l'hémicellulose tels que le bois, la paille ou le papier.

7. Procédé de fabrication d'un polymère du propylène selon la revendication 5 ou 6, **caractérisé en ce qu'**une étape de purification est effectuée lors de l'étape a) ou lors de l'étape b).

8. Procédé de fabrication d'un polymère du propylène selon l'une quelconque des revendications 5 à 7, **caractérisé en ce que** l'étape a) est mise en oeuvre au moyen d'un microorganisme choisi parmi *Clostridium beijerinckii, Clostridium aurantibutyricum, Clostridium butylicum* ou un de leurs mutants.

9. Composition comprenant un polymère du propylène greffé selon l'une des revendications 1 à 4 ou obtenu suivant le procédé selon l'une quelconque des revendications 5 à 8, dans laquelle le polymère du propylène greffé est choisi parmi l'homopolymère de propylène greffé, un copolymère greffé comprenant du propylène ou un mélange de ces polymères, la composition comprenant en outre un polymère non greffé choisi parmi le polypropylène, un copolymère comprenant du propylène ou un mélange de ces polymères.

10. Utilisation d'une composition selon la revendication 9 en tant que composition adhésive utilisable notamment, en coextrusion, en extrusion couchage ou en extrusion-lamination.

11. Utilisation d'une composition selon la revendication 9 en tant que composition adhésive sur un support choisi parmi les métaux comme l'aluminium ou les polymères comme les polyesters, les polyamides, les résines époxy, les polyoléfines en particulier le polypropylène non greffé, les copolymères d'éthylène et d'acétate de vinyle saponifié.

12. Structure multicouche comprenant une couche d'une composition selon la revendication 9 entre une couche de polypropylène non greffé et une couche en un matériau choisi parmi les copolymères d'éthylène et d'acétate de vinyle saponifié, l'aluminium, les polyamides et les résines époxy.

13. Utilisation d'une structure multicouche selon la revendication 12 pour fabriquer des emballages par exemple des barquettes, des bouteilles ou des films, en tant qu'agent de couplage de composés dans une matrice polymère particulièrement en polypropylène, pour fabriquer des mélanges-maîtres, en tant que compatibilisant de polymères pour fabriquer des alliages, pour la fabrication de câbles électriques.

14. Utilisation d'une structure multicouche selon la revendication 12 comprenant une couche d'une composition adhésive entre une couche de polypropylène non greffé et une couche résine époxy/métal pour fabriquer des tubes de transfert de fluides, par exemple de pétrole ou de gaz.

## Patentansprüche

1. Propylenpolymer, das mit mindestens einem Pfropfmonomer gepfropft ist, ausgewählt aus ungesättigten Carbonsäuren oder ihren funktionellen Derivaten, ungesättigten Dicarbonsäuren mit 4 bis 10 Kohlenstoffatomen und ihren funktionellen Derivaten, C₁-C₈-Alkylestern oder Glycidylesterderivaten ungesättigter Carbonsäuren, Metallsalzen ungesättigter Carbonsäuren, **dadurch gekennzeichnet, dass** es eine Menge an Kohlenstoff aus nachwachsenden Rohstoffen (aus lebenden natürlichen Ressourcen - Tieren oder Pflanzen - die eine Mischung von 3 Isotopen sind: wobei ¹²C ungefähr 98,892 %, ¹³C ungefähr 1,108 % und ¹⁴C in Spuren: 1,2.10⁻¹⁰ % ausmacht) von mehr als 20 Ma.-%, vorzugsweise von mehr als 50 Ma.-%, bezogen auf die Gesamtmasse an Kohlenstoff des Propylenpolymers umfasst, wobei diese Menge an Kohlenstoff aus nachwachsenden Rohstoffen gemäß der Norm ASTM D 6866-06 gemessen ist.

2. Gepfropftes Propylenpolymer nach Anspruch 1, wobei die Menge an Pfropfmonomer höchstens 10 Gew.% bezogen auf das Gesamtgewicht des Polymers ausmacht.

3. Propylenpolymer nach Anspruch 1 oder 2, das mit einer ungesättigten Carbonsäure oder mit einem funktionellen Derivat von dieser Säure gepfropft ist.

4. Propylenpolymer nach einem der Ansprüche 1 bis 3, das mit Maleinsäureanhydrid gepfropft ist, das vorzugsweise Kohlenstoffatome erneuerbaren Ursprungs umfasst.

5. Verfahren zur Herstellung eines gepfropften Propylenpolymers nach einem der Ansprüche 1 bis 4, umfassend die folgenden Schritte:
a. Fermentieren von nachwachsenden Rohstoffen und gegebenenfalls Reinigen zur Herstellung eines Alkohols oder einer Mischung von Alkoholen, wobei der Alkohol oder die Mischung von Alkoholen mindestens Isopropanol und/oder mindestens eine Mischung aus Ethanol und 1-Butanol umfasst,
b. Dehydratisieren des Alkohols oder der Mischung von Alkoholen, die erhalten werden, um in mindestens einem ersten Reaktor ein Alken oder eine Mischung von Alkenen herzustellen, wobei das Alken oder die Mischung von Alkenen mindestens Propylen umfasst, und gegebenenfalls Reinigen der Mischung von Alkenen, um Propylen zu erhalten,
c. Polymerisieren des Propylens in mindestens einem zweiten Reaktor, gegebenenfalls in Gegenwart eines Comonomers, um ein Propylenpolymer herzustellen,
d. Isolieren des Propylenpolymers, der am Ende des Schrittes c) erhalten wird,
e. Pfropfen des Propylenpolymers, der am Ende des Schrittes d) erhalten wird.

6. Verfahren zur Herstellung eines Propylenpolymers nach Anspruch 5, **dadurch gekennzeichnet, dass** es sich bei den nachwachsenden Rohstoffen um pflanzliche Stoffe, ausgewählt aus Zuckerrohr und Zuckerrübe, Ahorn, Dattelpalme, Zuckerpalme, Sorghum, amerikanischer Agave, Mais, Weizen, Gerste, Sorghum, Futterweizen, Reis, Kartoffel, Maniok, Süßkartoffel, Stoffen, die Cellulose oder Hemicellulose umfassen, wie Holz, Stroh oder Papier, handelt.

7. Verfahren zur Herstellung eines Propylenpolymers nach Anspruch 5 oder 6, **dadurch gekennzeichnet, dass** ein Schritt des Reinigens bei dem Schritt a) oder bei dem Schritt b) durchgeführt wird.

8. Verfahren zur Herstellung eines Propylenpolymers nach einem der Ansprüche 5 bis 7, **dadurch gekennzeichnet, dass** der Schritt a) mit Hilfe eines Mikroorganismus, ausgewählt aus *Clostridium beijerinckii, Clostridium aurantibutyricum, Clostridium butylicum* oder einer ihrer Mutanten ausgeführt wird.

9. Zusammensetzung, umfassend ein gepfropftes Propylenpolymer nach einem der Ansprüche 1 bis 4 oder das nach dem Verfahren nach einem der Ansprüche 5 bis 8 erhalten ist, wobei das gepfropfte Propylenpolymer ausgewählt ist aus gepfropftem Propylen-Homopolymer, einem Pfropfcopolymer, umfassend Propylen oder einer Mischung dieser Polymere, wobei die Zusammensetzung ferner ein nicht gepfropftes Polymer umfasst, das ausgewählt ist aus Polypropylen, einem Copolymer, umfassend Propylen, oder einer Mischung dieser Polymere.

10. Verwendung einer Zusammensetzung nach Anspruch 9 als Klebstoffzusammensetzung, die insbesondere beim Coextrudieren, beim Extrusionsbeschichten oder beim Extrusionskaschieren verwendet werden kann.

11. Verwendung einer Zusammensetzung nach Anspruch 9 als Klebstoffzusammensetzung auf einem Träger, ausgewählt aus Metallen wie Aluminium oder Polymeren wie Polyestern, Polyamiden, Epoxyharzen, Polyolefinen, insbesondere ungepfropftem Polypropylen, verseiften Ethylen-Vinylacetat-Copolymeren.

12. Mehrschichtstruktur, umfassend eine Schicht aus einer Zusammensetzung nach Anspruch 9 zwischen einer Schicht aus ungepfropftem Polypropylen und einer Schicht aus einem Material, ausgewählt aus den verseiften Ethylen-Vinylacetat-Copolymeren, Aluminium, den Polyamiden und den Epoxyharzen.

13. Verwendung einer Mehrschichtstruktur nach Anspruch 12, um Verpackungen, beispielsweise Schalen, Flaschen oder Folien, herzustellen, als Kupplungsmittel von Verbindungen in einer Polymermatrix, insbesondere aus Polypropylen, um Masterbatches herzustellen, als Kompatibilisator von Polymeren um Legierungen zur Herstellung von Elektrokabeln herzustellen.

14. Verwendung einer Mehrschichtstruktur nach Anspruch 12, umfassend eine Schicht aus einer Klebstoffzusammensetzung zwischen einer Schicht aus ungepfropftem Polypropylen und einer Epoxidharz/Metallschicht, um Transferrohre von Flüssigkeiten, beispielsweise von Öl oder Gas, herzustellen.

## Claims

1. Propylene polymer grafted by at least one grafting monomer chosen from unsaturated carboxylic acids or their functional derivatives, unsaturated dicarboxylic acids having 4 to 10 carbon atoms and their functional derivatives, C₁-C₈ alkyl esters of unsaturated carboxylic acids or glycidyl ester derivatives of unsaturated carboxylic acids, or metal salts of unsaturated carboxylic acids, **characterized in that** it comprises an amount of carbon resulting from renewable raw materials (resulting from living natural resource - animals or plants - which are a mixture of 3 isotopes: ¹²C representing approximately 98.892%, ¹³C approximately 1.108% and ¹⁴C as traces: 1.2 x 10⁻¹⁰%) of greater than 20%, preferably of greater than 50% by weight relative to the total weight of carbon of the propylene polymer, this amount of carbon resulting from renewable raw materials being measured according to the standard ASTM D 6866-06.

2. Grafted propylene polymer according to Claim 1, in which the amount of grafting monomer represents at most 10% by weight relative to the total weight of the polymer.

3. Propylene polymer according to Claim 1 or 2, grafted with an unsaturated carboxylic acid or a functional derivative of this acid.

4. Propylene polymer according to any one of Claims 1 to 3, grafted with maleic anhydride preferably comprising carbon atoms of renewable origin.

5. Process for manufacturing a grafted propylene polymer according to any one of Claims 1 to 4 comprising the following steps:
a. fermentation of renewable raw materials, and optionally purification, in order to produce an alcohol or a mixture of alcohols, said alcohol or mixture of alcohols comprising at least isopropanol and/or at least one mixture of ethanol and 1-butanol;
b. dehydration of the alcohol or of the mixture of alcohols obtained with a view to producing, in at least one first reactor, an alkene or a mixture of alkenes, said alkene or mixture of alkenes comprising at least propylene and, optionally purification of the mixture of alkenes in order to obtain propylene;
c. polymerization, in at least one second reactor, of the propylene, optionally in the presence of a comonomer, in order to produce a propylene polymer;
d. isolation of the propylene polymer obtained at the end of step c);
e. grafting of the propylene polymer obtained at the end of step d).

6. Process for manufacturing a propylene polymer according to Claim 5, **characterized in that** the renewable raw materials are plant materials chosen from sugar cane and sugar beet, maple, date palm, sugar palm, sorghum, American agave, corn, wheat, barley, sorghum, soft wheat, rice, potato, cassava, sweet potato, materials comprising cellulose or hemicellulose such as wood, straw or paper.

7. Process for manufacturing a propylene polymer according to Claim 5 or 6, **characterized in that** a purification step is carried out during step a) or during step b).

8. Process for manufacturing a propylene polymer according to any one of Claims 5 to 7, **characterized in that** step a) is carried out using a microorganism chosen from *Clostridium beijerinckii, Clostridium aurantibutyricum, Clostridium butylicum* or a mutant thereof.

9. Composition comprising a grafted propylene polymer according to one of Claims 1 to 4 or obtained following the process according to any one of Claims 5 to 8, in which the grafted propylene polymer is chosen from the grafted propylene homopolymer, a grafted copolymer comprising propylene or a mixture of these polymers, the composition also comprising an ungrafted polymer chosen from polypropylene, a copolymer comprising propylene or a mixture of these polymers.

10. Use of a composition according to Claim 9 as an adhesive composition that can be used in particular in coextrusion, in extrusion coating or in extrusion laminating.

11. Use of a composition according to Claim 9 as an adhesive composition on a support chosen from metals such as aluminum or polymers such as polyesters, polyamides, epoxy resins, polyolefins in particular ungrafted polypropylene, and copolymers of ethylene and saponified vinyl acetate.

12. Multilayer structure comprising a layer of a composition according to Claim 9 between a layer of ungrafted polypropylene and a layer made of a material chosen from copolymers of ethylene and saponified vinyl acetate, aluminium, polyamides and epoxy resins.

13. Use of a multilayer structure according to Claim 12 for manufacturing packaging, for example trays, bottles or films, as a coupling agent for compounds in a polymer matrix particularly made of polypropylene, for manufacturing masterbatches, as a compatibilizer of polymers in order to manufacture blends, and for the manufacture of electrical cables.

14. Use of a multilayer structure according to Claim 12, comprising a layer of an adhesive composition between a layer of ungrafted polypropylene and an epoxy resin/metal layer in order to manufacture pipes for transferring fluids, for example oil or gas.
